# EUROPEAN PATENT APPLICATION

(11) **EP 4 633 243 A1**
(43) Date of publication of application: **15.10.2025**
(21) Application number: 22967653.1
(22) Date of filing: 09.12.2022
(51) Int. Cl.: H04W 52/02

(54) **COMMUNICATION METHODS AND COMMUNICATION APPARATUSES**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Mewburn Ellis LLP
(86) International application number: PCT/CN2022/138082
(87) International publication number: WO 2024/119505

(57) **Abstract**

A communication method and a communication device are provided. The method includes the following. A first device in a first mode communicates with a second device, where when the first device is in the first mode, the first device satisfies at least one of the following: the first device does not actively send information or initiate a communication request when the first device is in an idle state or disconnected from a network; or the first device sends information according to a trigger signal sent by the second device. The method in the embodiments of the present disclosure helps to reduce the power consumption of the first device.

## Description

### TECHNICAL FIELD

The present disclosure relates to the field of communication technology, and more specifically, to a communication method and a communication device.

### BACKGROUND

Electronic tags can harvest energy from electromagnetic waves in space and power their load circuits using the harvested energy, so that low-power or even battery-free communication can be realized. However, the energy harvested by the electronic tag is relatively limited, and thus the electronic tag may not be able to actively initiate communication in a conventional manner. Therefore, how to further reduce the power consumption of the electronic tag has become a technical problem that needs to be solved urgently.

### SUMMARY

The embodiments of the present disclosure provide a communication method and a communication device. The following will introduce various aspects involved in the embodiments of the present disclosure.

According to a first aspect, a communication method is provided. The communication method includes the following. A first device in a first mode communicates with a second device, where when the first device is in the first mode, the first device satisfies at least one of the following: the first device does not actively send information or initiate a communication request when the first device is in an idle state or disconnected from a network; or the first device sends information according to a trigger signal sent by the second device.

According to a second aspect, a communication method is provided. The communication method includes the following. A second device communicates with a first device in a first mode, where when the first device is in the first mode, the first device satisfies at least one of the following: the first device does not actively send information or initiate a communication request when the first device is in an idle state or disconnected from a network; or the first device sends information according to a trigger signal sent by the second device.

According to a third aspect, a communication device is provided. The communication device includes a communication unit configured to communicate in a first mode with a second device, where when the device is in the first mode, the device satisfies at least one of the following: the device does not actively send information or initiate a communication request when the device is in an idle state or disconnected from a network; or the device sends information according to a trigger signal sent by the second device.

According to a fourth aspect, a communication device is provided. The communication device includes a communication unit configured to communicate with a first device in a first mode, where when the first device is in the first mode, the first device satisfies at least one of the following: the first device does not actively send information or initiate a communication request when the first device is in an idle state or disconnected from the network; or the first device sends information according to a trigger signal sent by the device.

According to a fifth aspect, a communication device is provided. The communication device includes a memory, a transceiver, and a processor. The memory is configured to store a program. The processor is configured to receive and send data through the transceiver, and to call the program in the memory so that the communication device executes the method as described in the first aspect.

According to a sixth aspect, a communication device is provided. The communication device includes a memory, a transceiver, and a processor. The memory is configured to store a program. The processor is configured to receive and send data through the transceiver, and to call the program in the memory so that the communication device executes the method as described in the second aspect.

According to a seventh aspect, a chip is provided. The chip includes a processor configured to call a program from a memory so that a device equipped with the chip executes the method as described in the first aspect.

According to an eighth aspect, a chip is provided. The chip includes a processor configured to call a program from a memory so that a device equipped with the chip executes the method as described in the second aspect.

According to a ninth aspect, a computer-readable storage medium storing a program thereon is provided, where the program enables a computer to execute the method as described in the first aspect.

According to a tenth aspect, a computer-readable storage medium storing a program thereon is provided, where the program enables a computer to execute the method as described in the second aspect.

According to an eleventh aspect, a computer program product including a program is provided, where the program enables a computer to execute the method as described in the first aspect.

According to a twelfth aspect, a computer program product including a program is provided, where the program enables a computer to execute the method as described in the second aspect.

According to a thirteenth aspect, a computer program is provided, where the computer program enables a computer to execute the method as described in the first aspect.

According to a fourteenth aspect, a computer program is provided, where the computer program enables a computer to execute the method as described in the second aspect.

In the embodiments of the present disclosure, when the first device is in the first mode, the first device satisfies at least one of the following: the first device does not actively send information or initiate a communication request when the first device is in an idle state or disconnected from the network; or the first device sends information according to the trigger signal sent by the second device. That is, when the first device in the first mode communicates with the second device, the first device does not need to actively send information or a communication request, thereby helping to reduce the power consumption of the first device.

### BRIEF DESCRIPTION OF THE DRAWINGS

FIG. 1 is an exemplary diagram of a wireless communication system to which the embodiments of the present disclosure are applicable.
FIG. 2 is an exemplary diagram illustrating an operating principle of an electronic tag in the embodiments of the present disclosure.
FIG. 3 is a schematic flow chart illustrating that an electronic tag performs communication in a first mode in an embodiment of the present disclosure.
FIG. 4 is a schematic flow chart illustrating that an electronic tag performs communication in a first mode in another embodiment of the present disclosure.
FIG. 5 is a schematic flow chart illustrating that an electronic tag performs communication in a first mode in yet another embodiment of the present disclosure.
FIG. 6 is a schematic flow chart of a communication method provided by an embodiment of the present disclosure.
FIG. 7 is a schematic flow chart of a communication method provided by another embodiment of the present disclosure.
FIG. 8 is a schematic flow chart of a communication method provided by yet another embodiment of the present disclosure.
FIG. 9 is a schematic flow chart of a communication method provided by yet another embodiment of the present disclosure.
FIG. 10 is a schematic structural diagram of a communication device provided by an embodiment of the present disclosure.
FIG. 11 is a schematic structural diagram of a communication device provided by another embodiment of the present disclosure.
FIG. 12 is a schematic structural diagram of a device provided by an embodiment of the present disclosure.

### DETAILED DESCRIPTION

The technical solution in the present disclosure will be described below in conjunction with the accompanying drawings.

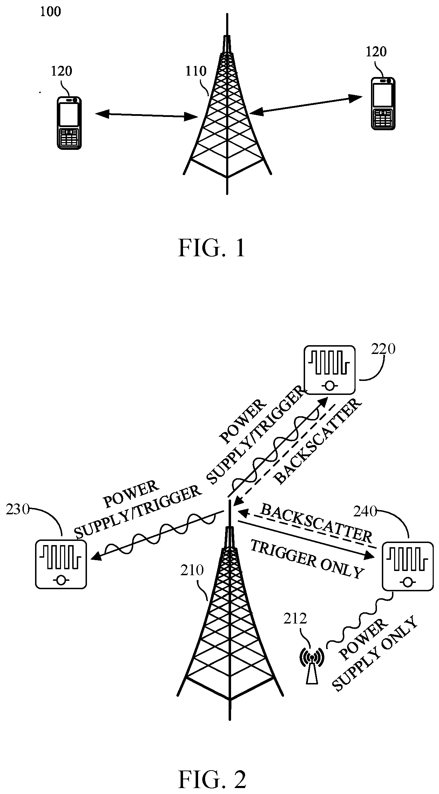

FIG. 1 illustrates a wireless communication system 100 to which the embodiments of the present disclosure are applicable. The wireless communication system 100 may include a network device 110 and a user equipment (UE) 120. The network device 110 may communicate with the UE 120. The network device 110 may provide communication coverage for a specific geographical area and may communicate with the UE 120 located in the coverage area. The UE 120 may access a network (such as a wireless network) through the network device 110.

FIG. 1 exemplarily illustrates a network device and two UEs. Optionally, the wireless communication system 100 may include multiple network devices, and in the coverage area of each network device, other number of terminal devices may be included, which is not limited in the embodiments of the present disclosure. Optionally, the wireless communication system 100 may further include other network entities such as a network controller and a mobility management entity (MME), which is not limited in the embodiments of the present disclosure.

It may be understood that, the technical solutions of the embodiments of the present disclosure can be applied to various communication systems, such as: the fifth generation (5G) system or new radio (NR), the long term evolution (LTE) system, the LTE frequency division duplex (FDD) system, LTE time division duplex (TDD), etc. The technical solutions provided by the present disclosure can also be applied to future communication systems, such as the sixth generation (6G) mobile communication system, the satellite communication system, etc.

The UE in the embodiments of the present disclosure may also be referred to as a terminal device, an access terminal, a user unit, a user station, a mobile station (MS), a mobile terminal (MT), a remote station, a remote terminal, a mobile device, a user terminal, a terminal, a wireless communication device, a user agent or a user device. The UE in the embodiments of the present disclosure may refer to a device that can provide voice and/or data connectivity to a user, and may be used to connect people, objects, and machines, for example, may be a device with a wireless connection function such as a handheld device, a vehicle-mounted device, etc. The UE in the embodiments of the present disclosure may be a mobile phone, a pad, a laptop computer, a personal digital assistant (PDA), a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in a smart city, a wireless terminal in a smart home, etc. Optionally, the UE may serve as a base station. For example, the UE may serve as a scheduling entity that can provide sidelink signals between UEs in vehicle to everything (V2X) or device to device (D2D), etc. For example, cellular phones and cars can communicate with each other using sidelink signals. Cellular phones and smart home devices can communicate with each other without the need for communication signal relay by the base station.

The network device in the embodiments of the present disclosure may be a device that can communicate with a UE, and the network device may also be referred to as an access network device or a radio access network device, such as a base station. The network device in the embodiments of the present disclosure may refer to a radio access network (RAN) node (or device) that can access a UE to a wireless network. The base station can broadly cover various names as follows, or be replaced with the following names, such as: NodeB, evolved NodeB (eNB), next generation NodeB (gNB), relay station, access point, transmission/reception point (TRP), transmission point (TP), master eNodeB (MeNB), secondary eNodeB (SeNB), multistandard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node or the like, or a combination thereof.

In some embodiments, the network device may be fixed or mobile. For example, a helicopter or a drone may be configured to serve as a mobile network device, and one or more cells may move according to the location of the mobile network device. In other examples, a helicopter or a drone may be configured to serve as a device for communicating with another network device. In some embodiments, the network device may refer to a CU or a DU, or the network device may include a CU and a DU, or the network device may further include an AAU.

It may be understood that, the network device can be deployed on land, including indoors or outdoors, handheld or vehicle-mounted; can also be deployed on water; can also be deployed on aircraft, balloons, and satellites in the air. The network device and the scenarios in which the embodiments of the present disclosure are located are not limited in the embodiments of the present disclosure.

It may also be understood that, all or part of the functions of the network device and UE in the present disclosure may also be implemented by software functions running on hardware, or by virtualization functions instantiated on a platform (e.g., a cloud platform).

The UE in the embodiments of the present disclosure may also be an electronic tag or other zero-power devices. The electronic tag in the embodiments of the present disclosure include but is not limited to a radio frequency identification (RFID) tag, a passive internet of things (IoT) tag, an ambient power-enabled IoT (AIoT) tag or other electronic tags.

Backscatter technology has been widely used in practical production, such as RFID systems, tracking devices, remote switches, medical telemetry, and low-cost sensor networks. Backscatter technology is a wireless technology that can achieve signal transmission and coding without an active transmitter. Similar to the principle of radar, part of electromagnetic waves may be reflected when they reach the surface of an object. The strength of the reflected signal depends on the shape and the material of the object and the distance relative to the object. From the perspective of radar, each object has its radar cross-section (RCS).

The popularity of electronic tags also relies heavily on the increasing maturity of backscatter technology. The electronic tag can perform communication through backscatter, modulating a reflected signal by changing its RCS. A backscatter transmitter can modulate received RF signals to transmit data without generating RF signals itself. For example, the backscatter transmitter in an electronic tag can modulate and reflect received RF signals to transmit data, rather than generating RF signals itself.

The basic principle of RF energy harvesting is to harvest electromagnetic wave energy in space through electromagnetic induction. Electronic tags can harvest energy through RF energy harvesting and effectively use the harvested energy to drive their load circuits (low-power computing, sensors, etc.) to achieve battery-free communication.

The following will illustrate the operating principle of an electronic tag in conjunction with FIG. 2. As illustrated in FIG. 2, the network device can communicate with electronic tags in a variety of ways.

A cellular direct connection can be established between a network device and an electronic tag. For example, an RF signal sent by a network device 210 can provide energy to an electronic tag 220 and trigger the electronic tag 220 to perform backscatter. Accordingly, the electronic tag 220 can harvest energy from the RF signal through RF energy harvesting, and modulate and reflect the received RF signal to transmit data.

The network device can wake up an electronic tag with zero power consumption. For example, an RF signal sent by the network device 210 can trigger an electronic tag 230 to start (in other words, wake up the electronic tag 230) and supply energy to the electronic tag 230. Accordingly, the electronic tag 230 can be triggered by the RF signal to enter an operating state and harvest energy from the RF signal through RF energy harvesting.

A cellular direct connection with auxiliary power supply can be established between the network device and an electronic tag. For example, an RF signal sent by a network device 212 can supply power to an electronic tag 240, and the RF signal sent by the network device 210 can trigger the electronic tag 240 to perform backscatter. Accordingly, the electronic tag 240 can harvest energy from the RF signal sent by the network device 212 through RF energy harvesting, and modulate and reflect the RF signal sent by the network device 210 to send data.

With the continuous development of science and technology, the process and efficiency of RF energy harvesting have been improved, but it still faces the following challenges.
1) Due to the multipath propagation effect of electromagnetic waves, the uneven distribution of energy in space and time, and various interferences, the density of RF energy that can be harvested in a wireless environment is extremely low (less than 10nW/cm²). The RF energy that can be effectively harvested needs to meet a certain input power.
2) To drive logic circuits or chips and other computing units, a direct current (DC) voltage converted from energy harvested generally needs to meet the minimum output voltage requirement, and be converted into a stable DC voltage. How to improve the efficiency of energy harvesting, especially so that the harvested energy can still drive the circuit under low input voltage conditions, is a key issue that needs to be addressed.
3) How to reasonably manage the harvested or stored energy to drive the terminal to operate is an issue. The efficiency of converting energy harvested through RF energy harvesting into DC energy at low power is a challenge in the design of zero-power devices. At present, many experimental research results show that, RF signals with a system input power lower than - 30dBm are generally difficult to be effectively harvested and rectified into a usable DC voltage. The RF energy conversion efficiencies vary under different input powers and energy harvesting circuit designs. For example, the energy conversion efficiency at a low input power of -20dBm is often less than 10%, while the conversion efficiency at an input power of about -1dBm approaches 50%. Based on the current process, in order to meet the power and backscatter communication requirements of the most basic low-power computing circuit, at least about 10µW is required.

From the above introduction, it can be seen that, the energy harvested by the electronic tag is limited, and thus the electronic tag may not be able to actively initiate communication in a conventional manner like ordinary UEs, and at present, many processes that require the UE to actively initiate (such as periodic location updates, business requests, etc.) may not be able to proceed. Therefore, it is necessary to consider reducing the power consumption of the electronic tag.

Meanwhile, with the development of communication technology, the types of terminal devices have been increasing, and the power consumption of terminal devices has also received growing attention.

In order to solve one or more of the above technical problems, the present disclosure proposes a communication method and a communication device. In the embodiments of the present disclosure, a new communication mode is proposed, and when the terminal device is in the communication mode, the power consumption of the terminal device can be reduced. The communication mode will be first introduced below.

The new communication mode proposed in the present disclosure may be a first mode. When the first device is in the first mode, the first device may satisfy at least one of the following conditions: the first device does not actively send information or initiate a communication request when the first device is in an idle state or disconnected from the network; the first device sends information according to a trigger signal sent by a second device; or the first mode can be activated within a preset time period.

Sending information according to the trigger signal sent by the second device can be understood as that the first device sends information upon receiving the trigger signal sent by the second device.

Optionally, the communication request may include: a location update request, a service request, etc.

Optionally, when the first device is in the first mode, the first device can be powered by an ambient energy source (such as powered by an RF signal). Optionally, when the first device is in the first mode, the first device can send information (or a message(s)) only when the trigger signal is received, and does not need to actively send information (or a message(s)) at other times.

The first mode may also be referred to as a network initiated communication (NICO) mode.

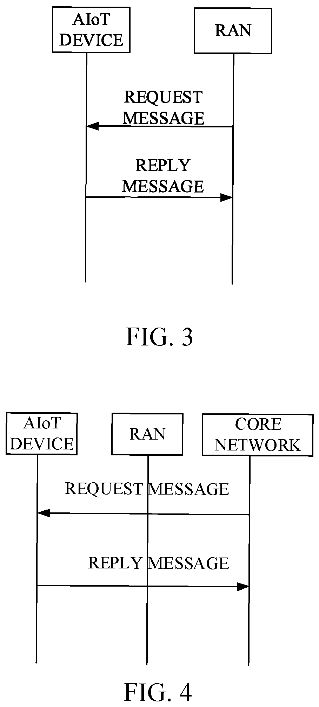

The following will describe the first mode in conjunction with FIG. 3 to FIG. 5 by taking an AIoT device as an example.

As illustrated in FIG. 3, the AIoT device can send a reply message to an RAN upon receiving a request message sent by the RAN. As illustrated in FIG. 4, the AIoT device can send a reply message to a core network element upon receiving a request message sent by the core network element. As illustrated in FIG. 4, the AIoT device can send a reply message to another UE upon receiving a request message sent by the other UE.

Optionally, the request message is equivalent to a trigger signal, or the request message may carry a trigger signal.

Optionally, the request message can serve as an excitation signal to enable the AIoT device to activate backscatter power supply, so that the AIoT device can backscatter a reply message.

Optionally, the request message can be used to request the AIoT device to report some information, such as identification information of the AIoT device, data measured or stored by the AIoT device, etc.

Optionally, the network node or UE can register or activate the AIoT device, and the network side can confirm entry into the first mode by the AIoT device.

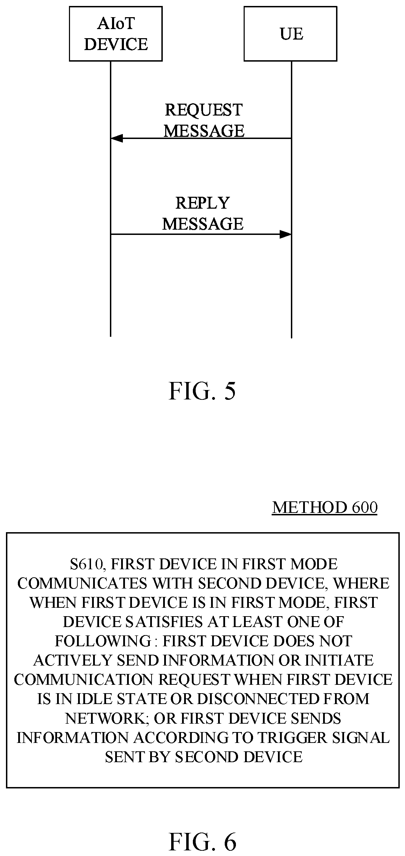

The embodiments of the present disclosure are described in detail below with reference to FIGS. 6 to 9.

FIG. 6 is a schematic flow chart of a communication method according to the embodiments of the present disclosure. The method 600 as illustrated in FIG. 6 may include steps S610 and S620, which are specifically as follows.

S610, a first device in a first mode communicates with a second device.

The first device may be a terminal device. Optionally, the terminal device may be an electronic tag, a reduced capability (RedCap) terminal, or an energy-saving terminal, etc. The terminal device may also be other low-performance terminals or terminal devices that need to reduce power consumption, which is not limited in the present disclosure.

The second device may be a core network element (such as an access and mobility management function (AMF)), an access network element (such as RAN), or a terminal device (such as UE), etc.

In the embodiments of the present disclosure, when the first device is in the first mode, the first device satisfies at least one of the following: the first device does not actively send information or initiate a communication request when the first device is in an idle state or disconnected from the network, or the first device sends information according to a trigger signal sent by the second device. That is, when the first device in the first mode communicates with the second device, the first device does not need to actively send information or a communication request, thereby helping to reduce the power consumption of the first device.

In some embodiments, before S610, the first device may send first information to the second device, where the first information may indicate that the first device needs to enter, has entered, or is about to enter the first mode.

Optionally, the first information may indicate at least one of the following: the first device has entered the first mode, the first device is about to enter the first mode, an identifier of the first device, or a capability of the first device corresponding to the first mode.

Optionally, the capability of the first device corresponding to the first mode may include whether the first device supports the first mode. The capability of the first device corresponding to the first mode may further include time information when the first device supports or can activate the first mode, where the time information may include: a point of time when the first device supports or can activate the first mode, a duration for which the first device supports or can activate the first mode, and a period of time during which the first device supports or can activate the first mode.

Optionally, the first information may explicitly indicate entry into the first mode by the first device. For example, the first information may indicate that the first device has entered or is about to enter the first mode.

Optionally, the first information may implicitly indicate entry into the first mode by the first device. For example, the first information may indicate the identifier of the first device and /or the capability of the first device corresponding to the first mode; accordingly, after receiving the first information, the second device may determine that the first device has entered or is about to enter the first mode according to the identifier of the first device and/or the capability of the first device corresponding to the first mode.

Optionally, the first information may further include first time information, where the first time information may represent time information of entering the first mode by the first device. Optionally, the first time information may represent time information when the first device has entered the first mode, or time information when the first device is about to enter the first mode.

The first time information may include at least one of the following: a point of time of entering the first mode, a period of time of entering the first mode, or a duration of entering the first mode.

Optionally, the first information may be carried in a non-access stratum (NAS) message, an access stratum (AS) protocol message, a sidelink message, or other messages (such as messages based on other protocol stacks).

For example, in the case where the second device is an AMF, the first information can be carried in an NAS message; in the case where the second device is an RAN, the first information can be carried in an AS protocol message; and in the case where the second device is a UE, the first information can be carried in a sidelink message.

It may be noted that, in the case where the second device is an RAN, the first device can interact with the RAN through an AS protocol message. The AS protocol message here may be a message corresponding to a layer in the existing protocol stack, and the existing protocol stack may include: a radio resource control (RRC), a packet data convergence protocol (PDCP), a radio link control (RLC), a medium access control (MAC), and a physical layer (PHY). For example, the AS protocol message may be an RRC message, a PDCP message, an RLC message, a MAC message, or a PHY message.

Alternatively, the AS protocol message may be a message corresponding to a certain layer in a protocol stack obtained by simplifying the existing protocol stack; or, it may be a message corresponding to a certain layer in a newly defined protocol stack; or, it may be a message corresponding to a newly added AS layer protocol in the existing protocol stack.

Alternatively, the first device may interact with the RAN through other messages, which is not limited in the embodiments of the present disclosure.

In some embodiments, the second device sends second information to the first device, and the second information may be confirmation information of the first information. Optionally, the second information may be used to confirm entry into the first mode by the first device.

The second information may also include confirmation information of the first time information. Optionally, the second information may be used to confirm time information of entering the first mode by the first device.

Similar to the first information, the second information may also be carried in an NAS message, an AS protocol message, a sidelink message, or other messages (such as messages based on other protocol stacks).

In some embodiments, before S610, the first device may send third information to the second device, where the third information may be used to request entry into the first mode.

Optionally, the third information may include the capability of the first device corresponding to the first mode. Accordingly, after receiving the third information, the second device may determine that the first device requests entry into the first mode according to the capability of the first device corresponding to the first mode (included in the third information).

Optionally, the third information may further include second time information, where the second time information may represent time information of requesting entry into the first mode by the first device.

The second time information may include at least one of the following: a point of time of requesting entry into the first mode, a time period of requesting entry into the first mode, or a duration of requesting entry into the first mode.

Similar to the first information, the third information may also be carried in an NAS message, an AS protocol message, a sidelink message, or other messages (such as messages based on other protocol stacks).

In some embodiments, the second device may interact with a third device (e.g., a subscription information storage network element) to obtain subscription information of the first device. Optionally, the second device may be an AMF, and the third device may be a unified data management (UDM). For example, the AMF may send a subscription information request message to the UDM to request the subscription information of the first device, and accordingly, the UDM may send the subscription information of the first device to the AMF.

Optionally, the second device may determine whether the first device is allowed to enter the first mode according to the subscription information of the first device.

Furthermore, the second device may further determine third time information according to the subscription information, where the third time information may represent time information of entering the first mode by the first device. For example, the third time information may include at least one of the following: a point of time when entry into the first mode is allowed, a time period during which entry into the first mode is allowed, or a duration for which entry into the first mode is allowed.

In some embodiments, the second device may interact with the third device to determine whether the first device is allowed to enter the first mode. Optionally, the second device may be an RAN, and the third device may be an AMF. For example, the RAN may send fifth information to the AMF, where the fifth information may indicate that the first device requests entry into the first mode. Accordingly, the AMF may send sixth information to the RAN, where the sixth information may indicate whether the first device is allowed to enter the first mode.

Optionally, similar to the above embodiment, the third device may obtain the subscription information of the first device, and determine whether the first device is allowed to enter the first mode according to the subscription information.

In some embodiments, the second device is a UE and the third device is an AMF. For example, the UE may send seventh information to the AMF, where the seventh information may indicate that the first device requests entry into the first mode. Correspondingly, the AMF may send eighth information to the UE, where the eighth information may indicate whether the first device is allowed to enter the first mode. Optionally, the seventh information and the eighth information may be carried in NAS messages.

In some embodiments, the second device sends fourth information to the first device, where the fourth information may indicate whether the first device is allowed to enter the first mode.

Optionally, the fourth information may further include third time information, where the third time information may represent time information of allowing the first device to enter the first mode.

The third time information may include at least one of the following: a point of time when entry into the first mode is allowed, a time period during which entry into the first mode is allowed, or a duration for which entry into the first mode is allowed.

Similar to the first information, the fourth information may also be carried in an NAS message, an AS protocol message, a sidelink message or other messages (such as messages based on other protocol stacks).

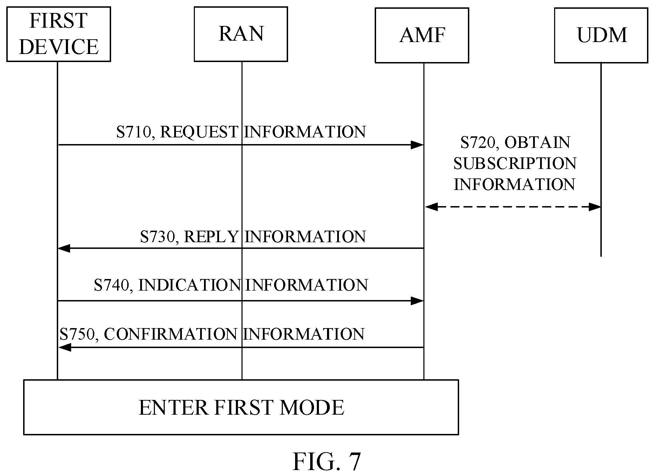

In conjunction with FIG. 7, the above embodiment will be described below by taking the second device as an AMF as an example.

S710, a first device sends request information to the AMF.

Optionally, the request information may be the third information mentioned above. The request information may be carried in an NAS message.

Optionally, the request information may include a capability of the first device corresponding to a first mode. The request information may further include second time information.

S720, the AMF obtains subscription information of the first device through a UDM.

Optionally, the AMF may interact with a subscription information storage network element to obtain the subscription information of the first device.

Optionally, the AMF may determine whether the first device is allowed to enter the first mode according to the subscription information. A new parameter may be added to the subscription information. The new parameter may indicate whether the first device is allowed to enter the first mode, and/or whether the first device supports the first mode. The new parameter may further indicate time information of allowing the first device to enter the first mode, for example, a point of time when entry into the first mode is allowed, a time period during which entry into the first mode is allowed, and/or a duration for which entry into the first mode is allowed.

S730, the AMF sends a reply message to the first device.

Optionally, the reply information may be the fourth information mentioned above. The reply information may be carried in an NAS message.

Optionally, the reply information may indicate whether the first device is allowed to enter the first mode. The reply information may further include third time information.

S740, the first device sends indication information to the AMF.

Optionally, the indication information may be the first information mentioned above. The indication information may be carried in an NAS message.

Optionally, in the case where the first device needs to enter, has entered, or is about to enter the first mode, the first device may send the indication information to the AMF. The indication information may indicate that the first device needs to enter, has entered, or is about to enter the first mode. The indication information may further include first time information.

S750, the AMF sends confirmation information to the first device.

Optionally, the confirmation information may be the second information mentioned above. The confirmation information may be confirmation information of the indication information mentioned above.

Optionally, steps S740 and S750 may be performed separately, that is, the request process of steps S710 to S730 is not required, and the first device can directly initiate the notification of activating the first mode.

Alternatively, step S740 may be performed separately, that is, after the first device decides itself to activate the first mode, the first device only needs to send the indication information in step S740 to notify a core network element that the first device has activated the first mode, without waiting to receive the confirmation information of step S750.

Optionally, the above step S720 may be performed after the AMF receives the request information sent by the first device in S710, or may be performed before S710.

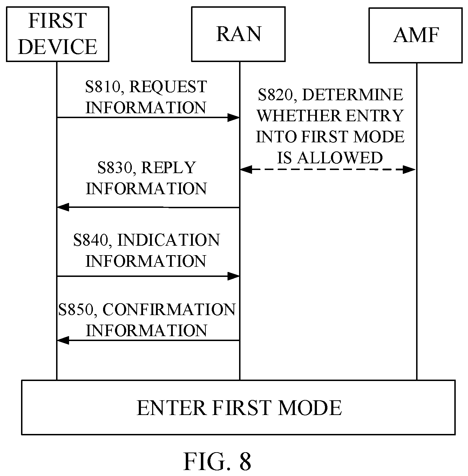

In conjunction with FIG. 8, the above embodiment will be described below by taking the second device as an RAN as an example.

S810, a first device sends request information to the RAN.

Optionally, the request information may be the third information mentioned above. The request information may be carried in an RRC message.

Optionally, the request information may include a capability of the first device corresponding to a first mode. The request information may further include second time information.

S820, the RAN determines through an AMF whether the first device is allowed to enter the first mode.

The RAN may send fifth information to the AMF, where the fifth information may indicate that the first device requests entry into the first mode. Correspondingly, the AMF may send sixth information to the RAN, where the sixth information may indicate whether the first device is allowed to enter the first mode.

Optionally, the AMF may interact with a subscription information storage network element to obtain subscription information of the first device.

Optionally, the AMF may determine whether the first device is allowed to enter the first mode according to the subscription information. A new parameter may be added to the subscription information. The new parameter may indicate whether the first device is allowed to enter the first mode, and/or whether the first device supports the first mode. The new parameter may further indicate time information of allowing the first device to enter the first mode, for example, a point of time when entry into the first mode is allowed, a time period during which entry into the first mode is allowed, and/or a duration for which entry into the first mode is allowed.

S830, the RAN sends reply information to the first device.

Optionally, the reply information may be the fourth information mentioned above. The reply information may be carried in an RRC message.

Optionally, the reply information may indicate whether the first device is allowed to enter the first mode. The reply information may further include third time information.

S840, the first device sends indication information to the RAN.

Optionally, the indication information may be the first information mentioned above. The indication information may be carried in an RRC message.

Optionally, in the case where the first device needs to enter, has entered, or is about to enter the first mode, the first device may send the indication information to the AMF. The indication information may indicate that the first device needs to enter, has entered, or is about to enter the first mode. The indication information may further include first time information.

S850, the RAN sends confirmation information to the first device.

Optionally, the confirmation information may be the second information mentioned above. The confirmation information may be confirmation information of the indication information mentioned above.

Optionally, steps S840 and S850 may be performed separately, that is, the request process of steps S810 to S830 is not required, and the first device can directly initiate the notification of activating the first mode.

Alternatively, step S840 may be performed separately, that is, after the first device decides itself to activate the first mode, the first device only needs to send the indication information in step S840 to notify the core network element that the first device has activated the first mode, without waiting to receive the confirmation message in step S850.

Optionally, the above step S820 may be executed after the RAN receives the request information sent by the first device in S810, or may be executed before S810.

It may be noted that, in each step of the above method 800, the first device and the RAN may also interact through other AS protocol messages (except an RRC message), for example, a PDCP message, an RLC message, a MAC message, or a PHY message.

The AS protocol message may be a message corresponding to a certain layer in the existing protocol stack; or, it may be a message corresponding to a certain layer in the protocol stack obtained by simplifying the existing protocol stack; or, it may be a message corresponding to a certain layer in a newly defined protocol stack; or, it may be a message corresponding to an AS protocol newly added to the existing protocol stack.

Alternatively, the first device may further interact with the RAN through other messages, which is not limited in the embodiments of the present disclosure.

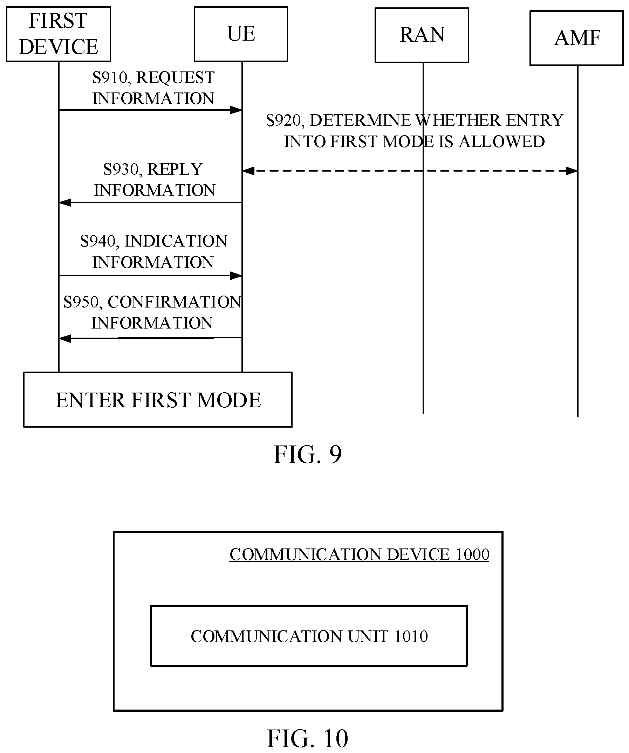

In conjunction with FIG. 9, the above embodiment will be described by taking the second device as a UE as an example.

S910, a first device sends request information to the UE.

Optionally, the request information may be the third information mentioned above. The request information may be carried in a sidelink message.

Optionally, the request information may include a capability of the first device corresponding to a first mode. The request information may further include second time information.

S920, the UE determines through an AMF whether the first device is allowed to enter the first mode.

The UE may determine whether the first device is allowed to enter the first mode according to an indication from a network side (such as a core network element). For example, the UE may send seventh information to the AMF, where the seventh information may indicate that the first device requests entry into the first mode. Accordingly, the AMF may send eighth information to the UE, where the eighth information may indicate whether the first device is allowed to enter the first mode. Optionally, the seventh information or the eighth information may be carried in a NAS message.

Optionally, the AMF may interact with a subscription information storage network element to obtain subscription information of the first device.

Optionally, the AMF may determine whether the first device is allowed to enter the first mode according to the subscription information. A new parameter may be added to the subscription information. The new parameter may indicate whether the first device is allowed to enter the first mode, and/or whether the first device supports the first mode. The new parameter may further indicate time information of allowing the first device to enter the first mode, for example, a point of time when entry into the first mode is allowed, a time period during which entry into the first mode is allowed, and/or a duration for which entry into the first mode is allowed.

S930, the UE sends reply information to the first device.

Optionally, the reply information may be the fourth information mentioned above. The reply information may be carried in a sidelink message.

Optionally, the reply information may indicate whether the first device is allowed to enter the first mode. The reply information may further include third time information.

S940, the first device sends indication information to the UE.

Optionally, the indication information may be the first information mentioned above. The indication information may be carried in a sidelink message.

Optionally, when the first device needs to enter, has entered, or is about to enter the first mode, the first device may send the indication information to the AMF. The indication information may indicate that the first device needs to enter, has entered, or is about to enter the first mode. The indication information may further include first time information.

S950, the UE sends confirmation information to the first device.

Optionally, the confirmation information may be the second information mentioned above. The confirmation information may be confirmation information of the indication information mentioned above.

The UE may obtain the confirmation information through a network side (such as a core network element). For example, the UE may forward the indication information sent by the first device to the AMF. Accordingly, the AMF may send the confirmation information of the indication information to the UE.

Optionally, steps S940 and S950 may be performed separately, that is, the request process of steps S910 to S930 is not required, and the first device can directly initiate the notification of activating the first mode.

Alternatively, step S940 may be performed separately, that is, after the first device decides itself to activate the first mode, the first device only needs to send the indication information in step S940 to notify the core network element that the first device has activated the first mode, without waiting to receive the confirmation information of step S950.

Optionally, the above step S920 can be executed after the UE receives the request information sent by the first device in S910, or can be executed before S910.

The method embodiments of the present disclosure are described in detail above in conjunction with FIGS. 1 to 9, and the device embodiments of the present disclosure will be described in detail below in conjunction with FIGS. 10 to 12. It may be understood that, the illustration of the method embodiments corresponds to the illustration of the device embodiments, and for the part not described in detail, reference can be made to the method embodiments described above.

FIG. 10 is a schematic structural diagram of a communication device provided in an embodiment of the present disclosure. As illustrated in FIG. 10, the device 1000 includes a communication unit 1010, which is specifically as follows. The communication unit 1010 is configured to communicate in a first mode with a second device, where when the device is in the first mode, the device satisfies at least one of the following: the device does not actively send information or initiate a communication request when the device is in an idle state or disconnected from a network; or the device sends information according to a trigger signal sent by the second device.

Optionally, before communicating in the first mode with the second device, the communication unit 1010 is further configured to send first information to the second device, where the first information indicates at least one of the following: the device has entered the first mode, the device is about to enter the first mode, an identifier of the device, or a capability of the device corresponding to the first mode.

Optionally, the first information further includes first time information, where the first time information represents time information of entering the first mode by the device.

Optionally, the first time information includes at least one of the following: a point of time of entering the first mode, a time period of entering the first mode, or a duration of entering the first mode.

Optionally, the communication unit 1010 is further configured to receive second information sent by the second device, where the second information is used to confirm entry into the first mode by the device.

Optionally, the second information further includes confirmation information of the first time information.

Optionally, the communication unit 1010 is further configured to send third information to the second device, where the third information is used to request entry into the first mode.

Optionally, the third information further includes second time information, where the second time information represents time information of requesting entry into the first mode by the first device.

Optionally, the second time information includes at least one of the following: a point of time of requesting entry into the first mode, a time period of requesting entry into the first mode, or a duration of requesting entry into the first mode.

Optionally, the communication unit 1010 is further configured to receive fourth information sent by the second device, where the fourth information indicates whether the device is allowed to enter the first mode.

Optionally, the fourth information further includes third time information, where the third time information indicates time information of allowing the device to enter the first mode.

Optionally, the third time information includes at least one of the following: a point of time when entry into the first mode is allowed, a time period during which entry into the first mode is allowed, or a duration for which entry into the first mode is allowed.

Optionally, the first information is carried in an NAS message, an AS protocol message, or a sidelink message.

Optionally, the first information is carried in an RRC message.

Optionally, the second device is an AMF, an RAN, or a terminal device.

Optionally, the first mode can be activated within a preset time period.

Optionally, the device is any one of the following: an electronic tag, a RedCap terminal, and an energy-saving terminal.

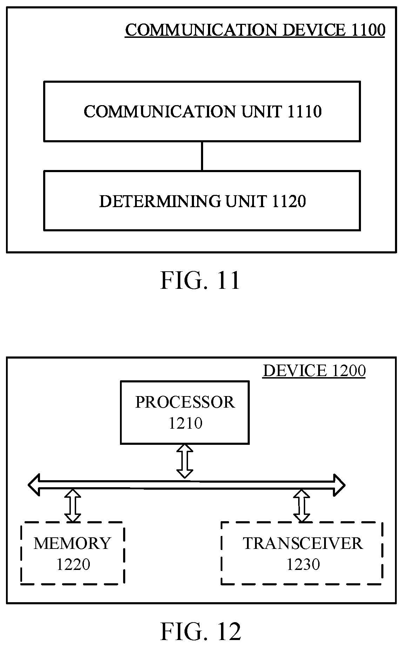

FIG. 11 is a schematic structural diagram of a communication device provided in an embodiment of the present disclosure. The communication device 1100 in FIG. 11 includes a communication unit 1110, which is specifically as follows. The communication unit 1110 is configured to communicate with a first device in a first mode, where when the first device is in the first mode, the first device satisfies at least one of the following: the first device does not actively send information or initiate a communication request when the first device is in an idle state or disconnected from a network; or the first device sends information according to a trigger signal sent by the device.

Optionally, before communicating with the first device in the first mode, the communication unit 1110 is further configured to receive first information sent by the first device, where the first information indicates at least one of the following: the first device has entered the first mode, the first device is about to enter the first mode, an identifier of the first device, or a capability of the first device corresponding to the first mode.

Optionally, the first information further includes first time information, where the first time information represents time information of entering the first mode by the first device.

Optionally, the first time information includes at least one of the following: a point of time of entering the first mode, a time period of entering the first mode, or a duration of entering the first mode.

Optionally, the communication unit 1110 is further configured to send second information to the first device, where the second information is used to confirm entry into the first mode by the first device.

Optionally, the second information further includes confirmation information of the first time information.

Optionally, the communication unit 1110 is further configured to receive third information sent by the first device, where the third information is used to request entry into the first mode.

Optionally, the third information further includes second time information, where the second time information represents time information of requesting entry into the first mode by the first device.

Optionally, the second time information includes at least one of the following: a point of time of requesting entry into the first mode, a time period of requesting entry into the first mode, or a duration of requesting entry into the first mode.

Optionally, the communication unit 1110 is further configured to send fourth information to the first device, where the fourth information indicates whether the first device is allowed to enter the first mode.

Optionally, the fourth information further includes third time information, where the third time information represents time information of allowing the first device to enter the first mode.

Optionally, the third time information includes at least one of the following: a point of time when entry into the first mode is allowed, a time period during which entry into the first mode is allowed, or a duration for which entry into the first mode is allowed.

Optionally, the first information is carried in an NAS message, an AS protocol message, or a sidelink message.

Optionally, the first information is carried in an RRC message.

Optionally, the device 1100 further includes a determining unit 1120 configured to determine, according to subscription information of the first device, that the first device is allowed to enter the first mode.

Optionally, the device 1100 further includes the determining unit 1120 configured to determine third time information according to the subscription information of the first device, where the third time information represents time information of allowing the first device to enter the first mode.

Optionally, the subscription information is obtained from a third device.

Optionally, the third device is a UDM.

Optionally, the communication unit 1110 is further configured to send fifth information to a third device, where the fifth information indicates that the first device requests entry into the first mode.

Optionally, the communication unit 1110 is further configured to receive sixth information sent by the third device, where the sixth information indicates whether the first device is allowed to enter the first mode.

Optionally, the third device is an AMF.

Optionally, the communication unit 1110 is further configured to send seventh information to the third device, where the seventh information indicates that the first device requests entry into the first mode.

Optionally, the communication unit 1110 is further configured to receive eighth information sent by the third device, where the eighth information indicates whether the first device is allowed to enter the first mode.

Optionally, the third device is an AMF.

Optionally, the device is an AMF, an RAN, or a terminal device.

Optionally, the first mode can be activated within a preset time period.

Optionally, the first device is any one of the following: an electronic tag, a RedCap terminal, and an energy-saving terminal.

FIG. 12 is a schematic structural diagram of a device provided in an embodiment of the present disclosure. The dotted lines in FIG.12 indicate that a unit or module is optional. The device 1200 can be configured to implement the methods described in the above method embodiments. The device 1200 can be a chip or a communication device.

The device 1200 may include one or more processors 1210. The processor 1210 may support the device 1200 to implement the methods described in the above method embodiments. The processor 1210 may be a general-purpose processor or a special-purpose processor. For example, the processor may be a central processing unit (CPU). Alternatively, the processor may also be other general-purpose processors, a digital signal processor (DSP), an application specific integrated circuit (ASIC), a field programmable gate array (FPGA) or other programmable logic devices, a discrete gate or a transistor logic device, a discrete hardware component, etc. The general-purpose processor may be a microprocessor or the processor may also be any conventional processor, etc.

The device 1200 may further include one or more memories 1220. The memory 1220 stores a program, which can be executed by the processor 1210, so that the processor 1210 can execute the methods described in the above method embodiments. The memory 1200 may be independent of the processor 1210 or integrated in the processor 1210.

The device 1200 may further include a transceiver 1230. The processor 1210 may communicate with other devices or chips through the transceiver 1230. For example, the processor 1210 may transmit and receive data with other devices or chips through the transceiver 1230.

The embodiments of the present disclosure further provide a computer-readable storage medium for storing a program. The computer-readable storage medium can be applied to the communication device provided in the embodiments of the present disclosure, and the program can enable a computer to execute the method executed by the communication device in each embodiment of the present disclosure.

The embodiments of the present disclosure further provide a computer program product. The computer program product includes a program. The computer program product can be applied to the communication device provided in the embodiments of the present disclosure, and the program can enable the computer to execute the method performed by the communication device in each embodiment of the present disclosure.

The embodiments of the present disclosure further provide a computer program. The computer program can be applied to the communication device provided in the embodiments of the present disclosure, and the computer program can enable a computer to execute the method executed by the communication device in each embodiment of the present disclosure.

It may be understood that, in the embodiments of the present disclosure, "*B* corresponding to *A"* means that B is associated with A, and B can be determined according to *A.* However, it may also be understood that, determining *B* according to *A* does not mean determining *B* only according to *A,* and *B* can also be determined according to *A* and/or other information.

It may be understood that, the term "and/or" herein only describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

It may be understood that, in various embodiments of the disclosure, the magnitude of a sequence number of each of the foregoing processes does not imply an execution order, and the execution order between the processes should be determined according to function and internal logic thereof, which shall not constitute any limitation to the implementation of the embodiments of the present disclosure.

It will be appreciated that the system, the systems, devices, and methods disclosed in the embodiments of the present disclosure may also be implemented in various other manners. For example, the above device embodiments are merely illustrative, e.g., the division of units is only a division of logical functions, and other manners of division may be available in practice, e.g., multiple modules may be combined or may be integrated into another system, or some features may be ignored or skipped. In other respects, the coupling or direct coupling or communication connection as illustrated or discussed may be an indirect coupling or communication connection through some interfaces or modules, and may be electrical, mechanical, or otherwise.

Units illustrated as separated components may or may not be physically separated. Components displayed as units may or may not be physical units, and may reside at one location or may be distributed to multiple networked units. Some or all of the units may be selectively adopted according to practical needs to achieve desired objectives of the solutions of the embodiments.

In addition, each functional unit in each embodiment of the present disclosure may be integrated into one processing unit, or each unit may exist physically separately, or two or more units may be integrated into one unit.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are loaded and executed on a computer, all or some of the processes or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The above is only a specific implementation of the present disclosure, but the protection scope of the present disclosure is not limited thereto. Any person skilled in the art who is familiar with the present technical field can easily think of changes or substitutions within the technical scope disclosed in the present disclosure, which should be included in the protection scope of the present disclosure. Therefore, the protection scope of the present disclosure should be based on the protection scope of the claims.

## Claims

1. A communication method, comprising:
communicating, by a first device in a first mode, with a second device, wherein when the first device is in the first mode, the first device satisfies at least one of the following:
the first device does not actively send information or initiate a communication request when the first device is in an idle state or disconnected from a network; or
the first device sends information according to a trigger signal sent by the second device.

2. The method according to claim 1, wherein before communicating, by the first device in the first mode, with the second device, the method further comprises:
sending, by the first device, first information to the second device, wherein the first information indicates at least one of the following:
the first device has entered the first mode, the first device is about to enter the first mode, an identifier of the first device, or a capability of the first device corresponding to the first mode.

3. The method according to claim 2, wherein the first information further comprises first time information, wherein the first time information represents time information of entering the first mode by the first device.

4. The method according to claim 3, wherein the first time information comprises at least one of the following: a point of time of entering the first mode, a time period of entering the first mode, or a duration of entering the first mode.

5. The method according to any one of claims 2 to 4, further comprising:
receiving, by the first device, second information sent by the second device, wherein the second information is used to confirm entry into the first mode by the first device.

6. The method according to claim 5, wherein the second information further comprises confirmation information of the first time information.

7. The method according to any one of claims 1 to 6, further comprising:
sending, by the first device, third information to the second device, wherein the third information is used to request entry into the first mode.

8. The method according to claim 7, wherein the third information further comprises second time information, wherein the second time information represents time information of requesting entry into the first mode by the first device.

9. The method according to claim 8, wherein the second time information comprises at least one of the following: a point of time of requesting entry into the first mode, a time period of requesting entry into the first mode, or a duration of requesting entry into the first mode.

10. The method according to any one of claims 7 to 9, further comprising:
receiving, by the first device, fourth information sent by the second device, wherein the fourth information indicates whether the first device is allowed to enter the first mode.

11. The method according to claim 10, wherein the fourth information further comprises third time information, wherein the third time information represents time information of allowing the first device to enter the first mode.

12. The method according to claim 11, wherein the third time information comprises at least one of the following: a point of time when entry into the first mode is allowed, a time period during which entry into the first mode is allowed, or a duration for which entry into the first mode is allowed.

13. The method according to any one of claims 2 to 12, wherein the first information is carried in a non-access stratum (NAS) message, an access stratum (AS) protocol message, or a sidelink message.

14. The method according to claim 13, wherein the first information is carried in a radio resource control (RRC) message.

15. The method according to any one of claims 1 to 14, wherein the second device is an access and mobility management function (AMF), a radio access network (RAN), or a terminal device.

16. The method according to any one of claims 1 to 15, wherein the first mode can be activated within a preset time period.

17. The method according to any one of claims 1 to 16, wherein the first device is any one of the following: an electronic tag, a reduced-capability (RedCap) terminal, and an energy-saving terminal.

18. A communication method, comprising:
communicating, by a second device, with a first device in a first mode, wherein when the first device is in the first mode, the first device satisfies at least one of the following:
the first device does not actively send information or initiate a communication request when the first device is in an idle state or disconnected from a network; or
the first device sends information according to a trigger signal sent by the second device.

19. The method according to claim 18, wherein before communicating, by the second device, with the first device in the first mode, the method further comprises:
receiving, by the second device, first information sent by the first device, wherein the first information indicates at least one of the following:
the first device has entered the first mode, the first device is about to enter the first mode, an identifier of the first device, or a capability of the first device corresponding to the first mode.

20. The method according to claim 19, wherein the first information further comprises first time information, wherein the first time information represents time information of entering the first mode by the first device.

21. The method according to claim 20, wherein the first time information comprises at least one of the following: a point of time of entering the first mode, a time period of entering the first mode, or a duration of entering the first mode.

22. The method according to any one of claims 19 to 21, further comprising:
sending, by the second device, second information to the first device, wherein the second information is used to confirm entry into the first mode by the first device.

23. The method according to claim 22, wherein the second information further comprises confirmation information of the first time information.

24. The method according to any one of claims 18 to 23, further comprising:
receiving, by the second device, third information sent by the first device, wherein the third information is used to request entry into the first mode.

25. The method according to claim 24, wherein the third information further comprises second time information, wherein the second time information represents time information of requesting entry into the first mode by the first device.

26. The method according to claim 25, wherein the second time information comprises at least one of the following: a point of time of requesting entry into the first mode, a time period of requesting entry into the first mode, or a duration of requesting entry into the first mode.

27. The method according to any one of claims 24 to 26, further comprising:
sending, by the second device, fourth information to the first device, wherein the fourth information indicates whether the first device is allowed to enter the first mode.

28. The method according to claim 27, wherein the fourth information further comprises third time information, wherein the third time information represents time information of allowing the first device to enter the first mode.

29. The method according to claim 28, wherein the third time information comprises at least one of the following: a point of time when entry into the first mode is allowed, a time period during which entry into the first mode is allowed, or a duration for which entry into the first mode is allowed.

30. The method according to any one of claims 19 to 29, wherein the first information is carried in a non-access stratum (NAS) message, an access stratum (AS) protocol message, or a sidelink message.

31. The method according to claim 30, wherein the first information is carried in a radio resource control (RRC) message.

32. The method according to any one of claims 19 to 30, further comprising:
determining, by the second device according to subscription information of the first device, that the first device is allowed to enter the first mode.

33. The method according to claim 32, further comprising:
determining, by the second device, third time information according to the subscription information of the first device, wherein the third time information represents time information of allowing the first device to enter the first mode.

34. The method according to claim 32 or 33, wherein the subscription information is obtained from a third device.

35. The method according to claim 34, wherein the third device is a unified data management (UDM).

36. The method according to any one of claims 19 to 31, further comprising:
sending, by the second device, fifth information to the third device, wherein the fifth information indicates that the first device requests entry into the first mode.

37. The method according to claim 36, further comprising:
receiving, by the second device, sixth information sent by the third device, wherein the sixth information indicates whether the first device is allowed to enter the first mode.

38. The method according to claim 36 or 37, wherein the third device is an access and mobility management function (AMF).

39. The method according to any one of claims 19 to 30, further comprising:
sending, by the second device, seventh information to the third device, wherein the seventh information indicates that the first device requests entry into the first mode.

40. The method according to claim 39, further comprising:
receiving, by the second device, eighth information sent by the third device, wherein the eighth information indicates whether the first device is allowed to enter the first mode.

41. The method according to claim 39 or 40, wherein the third device is an AMF.

42. The method according to any one of claims 18 to 41, wherein the second device is an AMF, a radio access network (RAN), or a terminal device.

43. The method according to any one of claims 18 to 42, wherein the first mode can be activated within a preset time period.

44. The method according to any one of claims 18 to 43, wherein the first device is any one of the following: an electronic tag, a reduced-capability (RedCap) terminal, or an energy-saving terminal.

45. A communication device, comprising:
a communication unit configured to communicate in a first mode with a second device, wherein when the device is in the first mode, the device satisfies at least one of the following:
the device does not actively send information or initiate a communication request when the device is in an idle state or disconnected from a network; or
the device sends information according to a trigger signal sent by the second device.

46. The device according to claim 45, wherein before communicating in the first mode with the second device, the communication unit is further configured to send first information to the second device, wherein the first information indicates at least one of the following:
the device has entered the first mode, the device is about to enter the first mode, an identifier of the device, or a capability of the device corresponding to the first mode.

47. The device according to claim 46, wherein the first information further comprises first time information, wherein the first time information represents time information of entering the first mode by the device.

48. The device according to claim 47, wherein the first time information comprises at least one of the following: a point of time of entering the first mode, a time period of entering the first mode, or a duration of entering the first mode.

49. The device according to any one of claims 46 to 48, wherein the communication unit is further configured to receive second information sent by the second device, wherein the second information is used to confirm entry into the first mode by the device.

50. The device according to claim 49, wherein the second information further comprises confirmation information of the first time information.

51. The device according to any one of claims 45 to 50, wherein the communication unit is further configured to send third information to the second device, wherein the third information is used to request entry into the first mode.

52. The device according to claim 51, wherein the third information further comprises second time information, wherein the second time information represents time information of requesting entry into the first mode by the first device.

53. The device according to claim 52, wherein the second time information comprises at least one of the following: a point of time of requesting entry into the first mode, a time period of requesting entry into the first mode, and a duration of requesting entry into the first mode.

54. The device according to any one of claims 51 to 53, wherein the communication unit is further configured to receive fourth information sent by the second device, wherein the fourth information indicates whether the device is allowed to enter the first mode.

55. The device according to claim 54, wherein the fourth information further comprises third time information, wherein the third time information represents time information of allowing the device to enter the first mode.

56. The device according to claim 55, wherein the third time information comprises at least one of the following: a point of time when entry into the first mode is allowed, a time period during which entry into the first mode is allowed, or a duration for which entry into the first mode is allowed.

57. The device according to any one of claims 46 to 56, wherein the first information is carried in a non-access stratum (NAS) message, an access stratum (AS) protocol message, or a sidelink message.

58. The device according to claim 57, wherein the first information is carried in a radio resource control (RRC) message.

59. The device according to any one of claims 45 to 58, wherein the second device is an access and mobility management function (AMF), a radio access network (RAN), or a terminal device.

60. The device according to any one of claims 45 to 59, wherein the first mode can be activated within a preset time period.

61. The device according to any one of claims 45 to 60, wherein the device is any one of the following: an electronic tag, a reduced-capability (RedCap) terminal, and an energy-saving terminal.

62. A communication device, comprising:
a communication unit configured to communicate with a first device in a first mode, wherein when the first device is in the first mode, the first device satisfies at least one of the following:
the first device does not actively send information or initiate a communication request when the first device is in an idle state or disconnected from a network; or
the first device sends information according to a trigger signal sent by the device.

63. The device according to claim 62, wherein before communicating with the first device in the first mode, the communication unit is further configured to receive first information sent by the first device, wherein the first information indicates at least one of the following:
the first device has entered the first mode, the first device is about to enter the first mode, an identifier of the first device, or a capability of the first device corresponding to the first mode.

64. The device according to claim 63, wherein the first information further comprises first time information, wherein the first time information represents time information of entering the first mode by the first device.

65. The device according to claim 64, wherein the first time information comprises at least one of the following: a point of time of entering the first mode, a time period of entering the first mode, or a duration of entering the first mode.

66. The device according to any one of claims 63 to 65, wherein the communication unit is further configured to send second information to the first device, wherein the second information is used to confirm entry into the first mode by the first device.

67. The device according to claim 66, wherein the second information further comprises confirmation information of the first time information.

68. The device according to any one of claims 62 to 67, wherein the communication unit is further configured to receive third information sent by the first device, wherein the third information is used to request entry into the first mode.

69. The device according to claim 68, wherein the third information further comprises second time information, wherein the second time information indicates time information of requesting entry into the first mode by the first device.

70. The device according to claim 69, wherein the second time information comprises at least one of the following: a point of time of requesting entry into the first mode, a time period of requesting entry into the first mode, or a duration of requesting entry into the first mode.

71. The device according to any one of claims 68 to 70, wherein the communication unit is further configured to send fourth information to the first device, wherein the fourth information indicates whether the first device is allowed to enter the first mode.

72. The device according to claim 71, wherein the fourth information further comprises third time information, wherein the third time information represents time information of allowing the first device to enter the first mode.

73. The device according to claim 72, wherein the third time information comprises at least one of the following: a point of time when entry into the first mode is allowed, a time period during which entry into the first mode is allowed, or a duration for which entry into the first mode is allowed.

74. The device according to any one of claims 63 to 73, wherein the first information is carried in a non-access stratum (NAS) message, an access stratum (AS) protocol message, or a sidelink message.

75. The device according to claim 74, wherein the first information is carried in a radio resource control (RRC) message.

76. The device according to any one of claims 63 to 74, further comprising a determining unit configured to determine, according to subscription information of the first device, that the first device is allowed to enter the first mode.

77. The device according to claim 76, further comprising the determining unit configured to determine third time information according to the subscription information of the first device, wherein the third time information represents time information of allowing the first device to enter the first mode.

78. The device according to claim 76 or 77, wherein the subscription information is obtained from a third device.

79. The device according to claim 78, wherein the third device is a unified data management (UDM).

80. The device according to any one of claims 63 to 75, wherein the communication unit is further configured to send fifth information to a third device, wherein the fifth information indicates that the first device requests entry into the first mode.

81. The device according to claim 80, wherein the communication unit is further configured to receive sixth information sent by the third device, wherein the sixth information indicates whether the first device is allowed to enter the first mode.

82. The device according to claim 80 or 81, wherein the third device is an access and mobility management (AMF).

83. The device according to any one of claims 63 to 74, wherein the communication unit is further configured to send seventh information to a third device, wherein the seventh information indicates that the first device requests entry into the first mode.

84. The device according to claim 83, wherein the communication unit is further configured to receive eighth information sent by the third device, wherein the eighth information indicates whether the first device is allowed to enter the first mode.

85. The device according to claim 83 or 84, wherein the third device is an access and mobility management function (AMF).

86. The device according to any one of claims 62 to 85, wherein the device is an AMF, a radio access network (RAN), or a terminal device.

87. The device according to any one of claims 62 to 86, wherein the first mode can be activated within a preset time period.

88. The device according to any one of claims 62 to 87, wherein the first device is any one of the following: an electronic tag, a reduced-capability (RedCap) terminal, and an energy-saving terminal.

89. A communication device, comprising a memory, a transceiver, and a processor, wherein the memory is configured to store a program, the processor is configured to receive and send data through the transceiver, and the processor is configured to call the program in the memory so that the communication device executes the method as described in any one of claims 1 to 17.

90. A communication device, comprising a memory, a transceiver, and a processor, wherein the memory is configured to store a program, the processor is configured to receive and send data through the transceiver, and the processor is configured to call the program in the memory so that the communication device executes the method as described in any one of claims 18 to 44.

91. A chip, comprising a processor configured to call a program from a memory so that a device equipped with the chip executes the method as described in any one of claims 1 to 17.

92. A chip, comprising a processor configured to call a program from a memory so that a device equipped with the chip executes the method as described in any one of claims 18 to 44.

93. A computer-readable storage medium storing a program thereon, wherein the program enables a computer to execute the method according to any one of claims 1 to 17.

94. A computer-readable storage medium storing a program thereon, wherein the program enables a computer to execute the method according to any one of claims 18 to 44.

95. A computer program product comprising a program, wherein the program enables a computer to execute the method according to any one of claims 1 to 17.

96. A computer program product comprising a program, wherein the program enables a computer to execute the method according to any one of claims 18 to 44.

97. A computer program, wherein the computer program enables a computer to execute the method according to any one of claims 1 to 17.

98. A computer program, wherein the computer program enables a computer to execute the method according to any one of claims 18 to 44.
